# EUROPEAN PATENT SPECIFICATION

(11) **EP 1 679 220 B1**
(45) Date of publication and mention of the grant of the patent: **29.10.2008**
(21) Application number: 05028746.5
(22) Date of filing: 30.12.2005
(51) Int. Cl.: B60K 35/00, B60K 37/02

(54) **Meter, meter body and meter cover**
Anzeigegerät, Gerätegehäuse und Geräteabdeckung
Compteur, boîtier de compteur et capot de compteur

(30) Priority: 06.01.2005 JP 2005001157
(43) Date of publication of application: 12.07.2006
(73) Proprietor: YAZAKI CORPORATION, Minato-ku Tokyo 108-8333 (JP)
(72) Inventor: Yamamoto, Tetsuya Yazaki Parts Co.,Ltd., Ogasa-gun Shizuoka (JP); Nagata, Masahide Yazaki Meter Co., Ltd., Shimada-shi Shizuoka (JP); Saito, Tatsuya Yazaki Meter Co., Ltd., Shimada-shi Shizuoka (JP); Nogaki, Takao Yazaki Parts Co.,Ltd., Ogasa-gun Shizuoka (JP); Fujimoto, Yasuhiko Toyota Jidosha K.K., Toyota-shi Aichi (JP); Takamatsu, Masahiro Toyota Jidosha K.K., Toyota-shi Aichi (JP); Nomura, Koji Toyota Jidosha K.K., Toyota-shi Aichi (JP)
(74) Representative: Grünecker, Kinkeldey, Stockmair & Schwanhäusser Anwaltssozietät

(56) References cited:
- EP-A- 0 925 989
- DE-A1- 10 161 768
- PATENT ABSTRACTS OF JAPAN vol. 2003, no. 09, 3 September 2003 (2003-09-03) & JP 2003 149009 A (YAZAKI CORP; TOYOTA MOTOR CORP), 21 May 2003 (2003-05-21)

## Description

### BACKGROUND OF THE INVENTION

This invention relates to a meter, a meter body and a meter cover, and more particularly to a meter, including a meter body and a meter cover covering the meter body, and the meter body and the meter cover used in the meter.

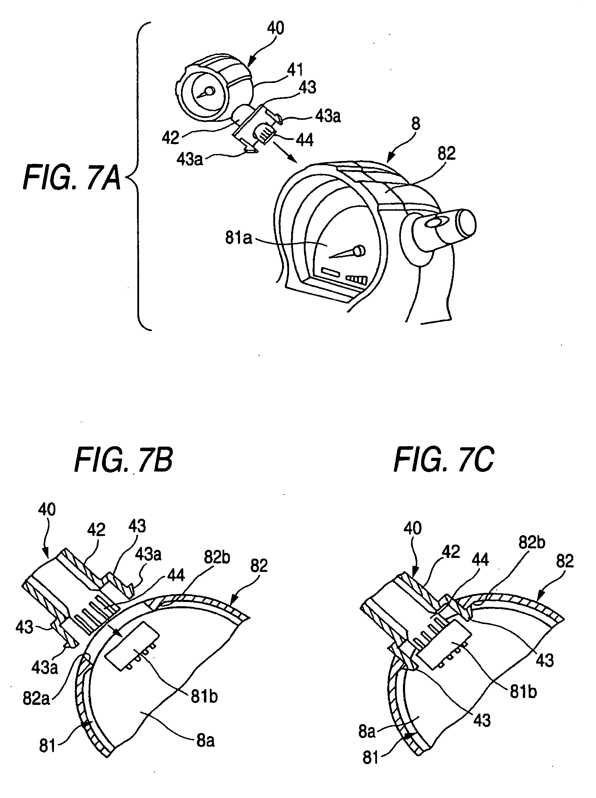

One related technique for mounting an optional meter such as a tachometer in addition to a main meter body such for example as a speedometer is disclosed in JP-A-2003-149009. The meter, disclosed in JP-A-2003-149009, will be described below with reference to Fig. 7. Fig. 7A is a schematic exploded, perspective view showing the related meter, Fig. 7B is a cross-sectional view of a portion of the meter, showing a condition before an optional meter is mounted, and Fig. 7C is a cross-sectional view of the portion of the meter, showing a condition after the optional meter is mounted.

As shown in these Figures, the meter 8 is, for example, a speedometer, and comprises a meter body 81 which has an indicator 81 a provided at a front side thereof, and is provided with a connector 81b (see Figs. 7B and 7C) for electrical connection to the optional meter 40, and a meter cover 82 covering the meter body 81. An opening (i.e., a notch) 82a through which the connector 81 b is exposed is formed in a side surface of the meter cover 82, and engagement step portions 82b for engagement respectively with engagement claws 43a (formed on a hole cover 43 of the optional meter 40 described later) are formed on an inner surface of the meter cover 82, and are disposed immediately adjacent to a peripheral edge of the opening 82a.

On the other hand, the optional meter 40 comprises an optional meter body 41, and a mounting portion 42. The optional meter body 41 is, for example, a tachometer. The mounting portion 42 has a pillar-like shape, and extends from a lower side of the optional meter body 41. A connector 44 is provided at an inner portion of a lower end of the mounting portion 42, and can be connected to the connector 81 b provided at the meter body 81 so as to electrically connect the optional meter to the meter body 81. The hole cover 43 for covering the opening 82a in the meter cover 82 is formed on the outer periphery of the mounting portion 42 at the lower end thereof. The above-mentioned engagement claws 43a for engagement respectively with the engagement step portions 82b are formed on the hole cover 43.

In a mounting operation, first, the hole cover 43 of the mounting portion 42 of the optional meter 40 is opposed to the opening 82a in the meter 8 as shown in Fig. 7B, and then the engagement claws 43a on the hole cover 43 are inserted into the opening 82a. Then, the connector 44 is inserted into the connector 81 b, and the engagement claws 43a are engaged with the engagement step portions 82b, respectively, thus completing the mounting of the optional meter 40 on the meter 8. In the case where the optional meter 40 is not necessary, a cover, having no opening 82a, is used as a meter cover.

Generally, the meter cover 82 has been mounted on the meter body 81 in such a manner that the indicator 81 a of the meter body 81 is exposed through a front opening of the meter cover 82. Incidentally, in the meter 8 on which the optional meter 40 can be mounted, it is necessary to strictly position the meter body 81 and the meter cover 82 relative to each other.

The reason is that if the opening 82a in the meter cover 82 is even slightly dislocated relative to the connector 81 b on the meter body 81, the connector 44 can not be inserted into the connector 81 b when the engagement claws 43a are inserted into the opening 82a, and as a result the engagement claws 43a can not be engaged with the engagement step portions 82b, respectively. And, even if the connector 44 can be inserted into the connector 81 b, a gap, formed between the opening 82a and the hole cover 43, is not uniform, and this detracts from the appearance.

Therefore, when the meter cover 82 is merely mounted on the meter body 81 in such a manner that the indicator 81 a of the meter body 81 is exposed through the front opening of the meter cover 82 as in the related example, it is difficult to strictly position the opening 82 in the meter cover 82 relative to the connector 81b provided on the meter body 81, thus inviting a problem that the efficiency of the mounting operation is low.

### SUMMARY OF THE INVENTION

With the above problems in view, it is an object of this invention to provide a meter, a meter body and a meter cover which can enhance the efficiency of a mounting operation.

In order to achieve the above object, according to the present invention, there is provided a meter, comprising:
a meter body that includes:
   an indicator provided at a front side thereof; and
   a connector for electrical connecting to an optional meter; and
a meter cover that is arranged to cover the meter body, and includes a notch portion in a side face thereof;
wherein the meter body has a first positioning part;
wherein the meter cover has a second positioning part for positioning the meter body and the meter cover relative to each other so that the connector is exposed through the notch portion when the first positioning part is engaged with the second positioning part.

In the above configuration, the meter body and the meter cover have their respective positioning parts which are fitted together to position the meter body and the meter cover relative to each other. Therefore, merely by fitting the two positioning parts (provided respectively at the meter body and the meter cover) together, the meter body and the meter cover can be easily and accurately positioned relative to each other. Therefore, the connector on the meter body and the notch portion in the meter cover will not be dislocated relative to each other, and the optional meter can be mounted on the meter in such a manner that a connector on the optional meter is connected to the connector on the meter body, with the notch positively closed by a hole cover of the optional meter.

Preferably, one of the first and second positioning parts includes a first convex portion having a fitting hole in a top face of the first convex portion. The other of the first and second positioning parts includes a second convex portion that is fitted in the fitting hole. The first convex portion has an opening in a side wall of the first convex portion, the opening communicating with the fitting hole.

In the above configuration, one of the two positioning parts, provided respectively at the meter body and the meter cover, includes the first convex portion having the fitting hole formed in the top face thereof. The other positioning parts includes the second convex portion which is inserted and fitted in the fitting hole. The opening is formed in the side wall of the first convex portion forming the fitting hole. Thus, the opening is formed in the side wall of the first convex portion, and therefore the second convex portion can be inserted into the fitting hole not only through the top side of the first convex portion but also through the opening in the side wall, and therefore a trajectory of mounting of the meter cover is not limited.

Here, it is preferable that, the first convex portion has a generally U-shaped cross-section; and the second convex portion includes a first fitting portion which is fitted in the first convex portion of the generally U-shape, and is held between a pair of generally parallel plate-like portions of the first convex portion.

Especially, the first convex portion has a first side wall, a second side wall that is parallel with the first side wall, and a third side wall that is perpendicular to the first and second side walls. The second convex portion has a first fitting portion that is fitted between the first side wall and the second side wall.

In the above configurations, the first convex portion has the generally U-shaped cross-section. The second convex portion includes the first fitting portion which is fitted in the first convex portion of the generally U-shape, and is held between the pair of generally parallel plate-like portions of the first convex portion. Thus, the first convex portion has the generally U-shaped cross-section, and therefore the first fitting portion of the second convex portion can be inserted into the fitting hole not only through the top side of the first convex portion but also through the opening in the U-shaped side wall, and is held between the pair of generally parallel plate-like portions, and therefore the trajectory of mounting of the meter cover is not limited.

Here, it is preferable that the second convex portion has a second fitting portion that grips the third side wall of the first convex portion.

Especially, the second fitting portion is a recessed portion formed on the second convex portion. The recessed portion is engaged to the third side wall.

In the above configurations, the second fitting portion is fitted in the first convex portion in gripping relation to the plate-like portion disposed perpendicular to the pair of plate-like portions of the U-shaped side wall. Therefore, the positioning in a direction parallel to the pair of plate-like portions can be accurately effected by the second fitting portion.

Preferably, at least one of the first and second positioning parts has an elastic convex portion formed on a contact area between the first positioning portion and the second positioning portion.

In the above configuration, one of the two positioning parts, provided respectively at the meter body and the meter cover, has the elastic convex portion formed at the portion thereof which is fitted to and contacts the other positioning parts. Thus, the elastic convex portion is designed to be deformed or crushed by the other positioning part when the meter body-side positioning part and the meter cover-side positioning part are fitted together. Therefore, after the two positioning parts are fitted together, a relative slight movement therebetween is prevented.

There is also provided a meter body, comprising:
an indicator provided at a front side of the meter body;
a connector for electrical connecting to an optional meter; and
a body-side positioning part that is arranged to be fitted to a cover-side positioning part provided on a meter cover for covering the meter body to position the meter body and the meter cover relative to each other so that the connector is exposed through a notch portion formed in a side face of the meter cover.

In the above configuration, the meter body has the indicator provided at the front side thereof, and is provided with the connector for electrical connection to the optional meter, and the meter body has the meter body-side positioning part which can be fitted to the meter cover-side positioning part so as to position the meter body and the meter cover relative to each other, the meter cover covering the meter body, and having the notch portion formed in the side surface thereof through which notch the connector is exposed. Therefore, merely by fitting the two positioning parts, provided respectively at the meter body and the meter cover, together, the meter body and the meter cover can be easily and accurately positioned relative to each other. Therefore, the connector on the meter body and the notch in the meter cover will not be dislocated relative to each other, and the optional meter can be mounted in such a manner that a connector on the optional meter is connected to the connector on the meter body, with the notch portion positively closed by a hole cover of the optional meter.

There is also provided a meter cover for covering a meter body that has an indicator at a front side thereof and a connector for electrical connection to an optional meter, the meter cover comprising:
a notch portion formed in a side face of the meter cover; and
a cover-side positioning part that is arranged to be fitted to a body-side positioning part provided at the meter body to position the meter cover and the meter body relative to each other so that the connector is exposed through the notch portion.

In the above configuration, the meter cover for covering the meter body which has the indicator provided at the front side thereof, and is provided with the connector for electrical connection to the optional meter, and the meter cover has the notch portion formed in the side surface thereof through which the connector is exposed. The meter cover has the meter cover-side positioning part which can be fitted to the positioning part, provided at the meter body, so as to position the meter cover and the meter body relative to each other. Therefore, merely by fitting the two positioning parts, provided respectively at the meter body and the meter cover, together, the meter body and the meter cover can be easily and accurately positioned relative to each other. Therefore, the connector on the meter body and the notch portion in the meter cover will not be dislocated relative to each other, and the optional meter can be mounted in such a manner that a connector on the optional meter is connected to the connector on the meter body, with the notch portion positively closed by a hole cover of the optional meter.

As described above, merely by fitting the two positioning parts, provided respectively at the meter body and the meter cover, together, the meter body and the meter cover can be easily and accurately positioned relative to each other. Therefore, the connector on the meter body and the notch portion in the meter cover will not be dislocated relative to each other, and the optional meter can be mounted in such a manner that the connector on the optional meter is connected to the connector on the meter body, with the notch portion positively closed by the hole cover of the optional meter. Therefore, there can be obtained the meter, the meter body and the meter cover which can enhance the efficiency of the mounting operation

In the above configurations, the opening is formed in the side wall of the first convex portion, and therefore the second convex portion can be inserted into the fitting hole not only through the top side of the first convex portion but also through the opening in the side wall. Therefore, the trajectory of mounting of the meter cover is not limited, and there can be provided the meter which can further enhance the efficiency of the mounting operation.

In the above configurations, the first convex portion has the generally U-shaped cross-section, and therefore the first fitting portion of the second convex portion can be inserted into the fitting hole not only through the top side of the first convex portion but also through the opening in the U-shaped side wall, and is held between the pair of generally parallel plate-like portions. Therefore, the trajectory of mounting of the meter cover is not limited, and there can be obtained the meter which can further enhance the efficiency of the mounting operation.

In the above configurations, the positioning in the direction parallel to the pair of plate-like portions can be accurately effected by the second fitting portion, and therefore there can be obtained the meter which can further enhance the efficiency of the mounting operation.

In the above configurations, the elastic convex portion is designed to be deformed or crushed when the meter body-side positioning part and the meter cover-side positioning part are fitted together, and therefore after the two positioning parts are fitted together, a relative slight movement therebetween is prevented. Therefore, there can be obtained the meter in which the generation of abnormal sounds due to this slight movement is prevented.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is an exploded, perspective view of a portion of a steering column module incorporating a meter including a meter body and a meter cover of the present invention;
Fig. 2 is a perspective view of the portion of the steering column module of Fig. 1;
Figs. 3A and 3B are a perspective view and a top plan view of a body-side rib 113, respectively;
Fig. 4 is a cross-sectional view taken along the line II-II of Fig. 3B, showing a condition in which a cover-side rib 123 is fitted in the body-side rib 113;
Fig. 5 is a cross-sectional view taken along the line III-III of Fig. 4;
Fig. 6 is a cross-sectional view taken along the line IV-IV of Fig. 5; and
Fig. 7A is a schematic exploded, perspective view showing one example of a related meter, Fig. 7B is a cross-sectional view of a portion of the meter, showing a condition before an optional meter is mounted, and Fig. 7C is a cross-sectional view of the portion of the meter, showing a condition after the optional meter is mounted.

### DETAILED DESCRIPTION OF THE PREFERRED EMBODIMENTS

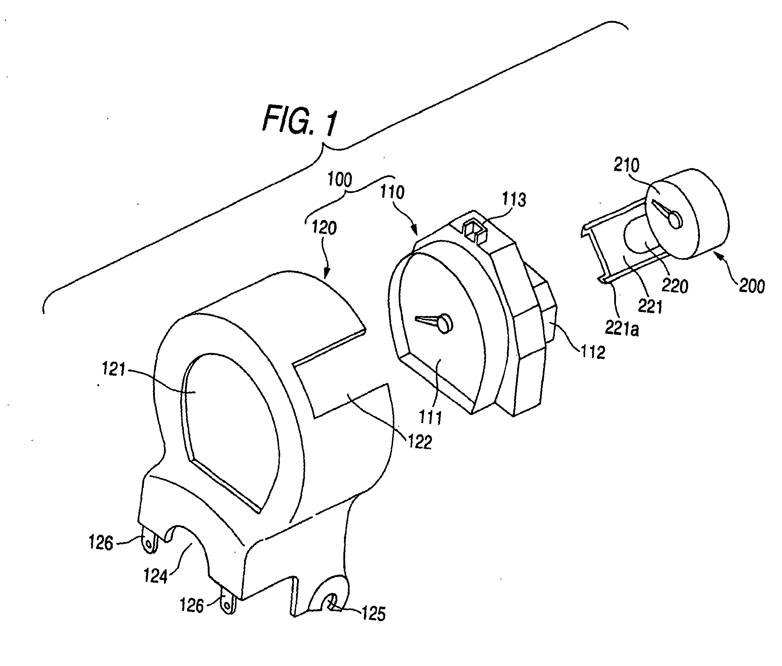

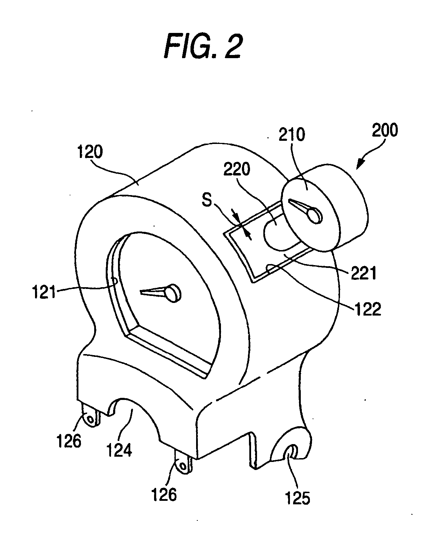

A meter, a meter body and a meter cover of the present invention will now be described with reference to the drawings. Fig. 1 is an exploded, perspective view of a portion of a steering column module incorporating the meter comprising the meter body and the meter cover of the invention, and Fig. 2 is a perspective view of the portion of the steering column module of Fig. 1. In this embodiment, the meter body is, together with a steering, is received within a column cover, and is disposed above this steering. In this embodiment, the column cover comprises an upper cover disposed above the steering, and an undercover disposed below the steering. In Fig. 1, the showing of the undercover and the steering is omitted.

As shown in Figs. 1 and 2, the meter 100 comprises the meter body 110 which has an indicator 111 provided at a front side thereof, and is provided with a connector 112 for electrical connection to an optional meter 200, and the upper cover (i.e., the meter cover) 120 which has an opening 121 for exposing the indicator 111 therethrough, and covers the meter body 110. A body-side rib 113 of a generally U-shaped cross-section is formed on and projects upwardly from an outer side surface (or peripheral surface) of the meter body 110.

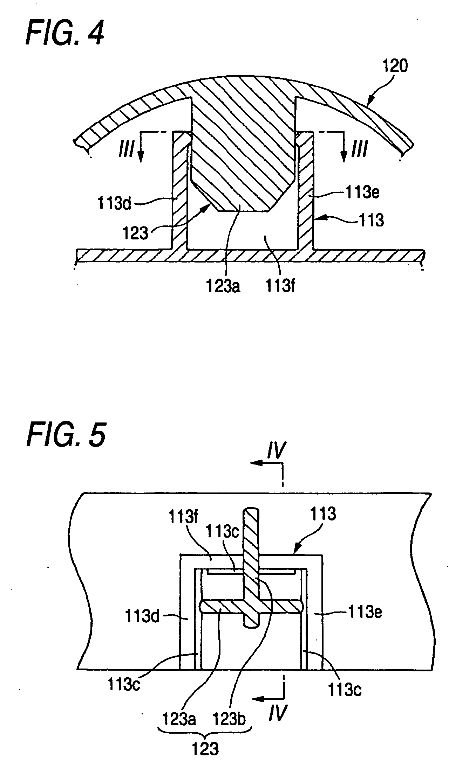

A notch 122 through which the connector 112 is exposed is formed in a side wall (or peripheral wall) of the upper cover 120. Engagement step portions (not shown) for engagement respectively with engagement claws 221 a (formed on a hole cover 221 of the optional meter 200 described later) are formed on an inner surface of the side wall, and are disposed immediately adjacent to a peripheral edge of the notch 122. A cover-side rib 123 (see Fig. 4) is formed on and projects from the inner surface of the side wall of the upper cover 120, and this cover-side rib 123 is fitted into the body-side rib 113 to position the upper cover 120 relative to the meter body 110. Notches 124 and 125 are formed in a lower end or edge of the upper cover 120, and in the assembling operation, a steering shaft and an ignition switch (both not shown) are passed through the notches 124 and 125, respectively. Further, mounting portions 126 for mounting the upper cover to the undercover are formed at the lower end of the upper cover.

When mounting the upper cover 120 on the meter body 110, the cover-side rib 123 (i.e., meter cover-side positioning part; second convex portion), formed at the upper cover 120, is fitted in the body-side rib 113 (i.e., meter body-side positioning part; first convex portion) formed at the meter body 110, thereby positioning the meter body 110 and the upper cover 120 relative to each other.

On the other hand, the optional meter 200 comprises an optional meter body 210, and a mounting portion 220. The mounting portion 220 has a pillar-like shape, and extends from a lower side of the optional meter body 210. As is the case with the related example, a connector (not shown) is provided at an inner portion of a lower end of the mounting portion 220, and can be connected to the connector 112 on the meter body 110 so as to electrically connect the optional meter 200 to the meter body 110. The hole cover 221 for covering the notch 122 in the upper cover 120 is formed on the outer periphery of the mounting portion 220 at the lower end thereof. The engagement claws 221 a for engagement respectively with the above-mentioned engagement step portions (not shown) are formed on the hole cover 221.

In the mounting operation, first, the hole cover 221 of the mounting portion 220 of the optional meter 200 is opposed to the notch 122 in the upper cover 120, and then the engagement claws 221 a on the hole cover 221 are inserted into the notch 122. Then, the connector (not shown) of the optional meter 200 is inserted into the connector 112, and the engagement claws 221 a are engaged with the engagement step portions (not shown), respectively, thus completing the mounting of the optional meter 200 on the meter 100 as shown in Fig. 2. In the case where the optional meter 200 is not necessary, a cover, having no notch 122, is used as an upper cover.

In the steering column module of the above construction, merely by fitting the body-side rib 113 (formed on the meter body 110) and the cover-side rib 123 (formed on the upper cover 120) together, the positioning of the meter body 110 and the upper cover 120 relative to each other can be easily and accurately effected. Therefore, the connector 112 on the meter body 110 and the notch 122 in the upper cover 120 will not be dislocated relative to each other, and the optional meter 200 can be mounted on the meter 100 in such a manner that the connector on the optional meter 200 is connected to the connector 112 on the meter body 110, and at this time the notch 122 is closed by the hole cover 221 of the optional meter 200 in such a manner that a gap S (see Fig. 2) between the hole cover 221 and the notch 122 is uniform. Therefore, the efficiency of the mounting operation can be enhanced.

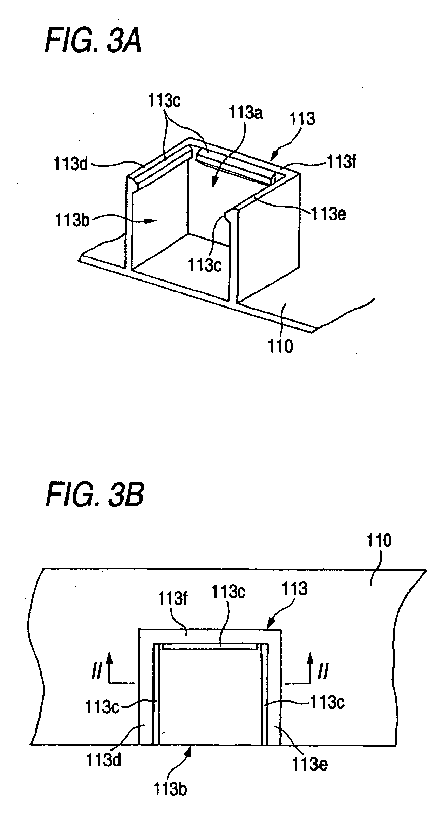

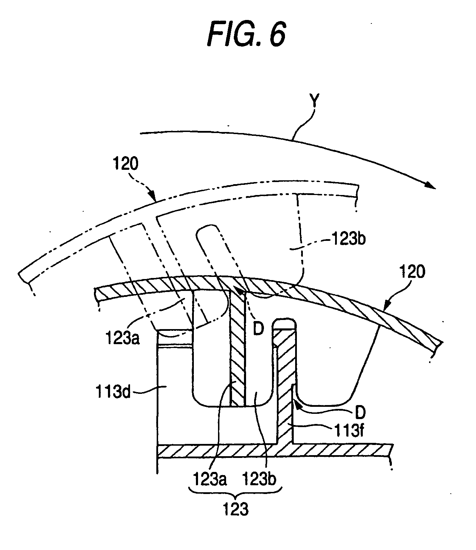

Next, details of the above-mentioned cover-side rib 123 and body-side rib 113 will be described with reference to Figs. 3 to 6. Figs. 3A and 3B are a perspective view and a top plan view of the body-side rib 113, respectively. Fig. 4 is a cross-sectional view taken along the line II-II of Fig. 3B, showing a condition in which the cover-side rib 123 is fitted in the body-side rib 113, and Fig. 5 is a cross-sectional view taken along the line III-III of Fig. 4, and Fig. 6 is a cross-sectional view taken along the line IV-IV of Fig. 5.

As shown in Fig. 3, the body-side rib 113 is formed on and projects upwardly from the outer surface of the meter body 110, and this body-side rib 113 has a fitting hole 113 of a generally square cross-section formed in its top surface. The cover side-rib 123 (described later) can be inserted and fitted into this fitting hole 113. Also, a front side of a side wall (or peripheral wall) of the body-side rib 113, forming the fitting hole 113a, is open to provide an opening 113b, so that the body-side rib 113 has a generally U-shape cross-section. Triangular ribs 113 (i.e., elastic convex portions) of a generally triangular cross-section are formed on an inner surface of the body-side rib 113.

As shown in Figs. 4 to 5, the cover-side rib 123 includes a first fitting portion 123a which can be fitted in the body-side rib 113 to be held between a pair of generally parallel plate-like portions 113d and 113e of the body-side rib 113, and a second fitting portion 123b which is formed integrally with the first fitting portion 123a, and has a fitting groove D (see Fig. 6) which can be fitted in a gripping manner on a plate-like portion 113f of the body-side rib 113 disposed perpendicular to the pair of plate-like portions 113d and 113e.

In the above construction, the front side of the side wall of the body-side rib 113, forming the fitting hole 113a, is open to provide the opening 113b as shown in Fig. 3. Therefore, the first fitting portion 123a of the cover-side rib 123 can be inserted into the fitting hole 113a not only through the open top of the body-side rib 113 but also through the front opening 113b. Thus, the opening 113b is formed in the body-side rib 113, taking into consideration a trajectory Y of mounting of the upper cover 120 relative to the meter body 110, and by doing so, the mounting trajectory of the upper cover 120 is not limited.

And besides, the body-side rib 113 has the generally U-shaped cross-section, and the cover-side rib 123 includes the first fitting portion 123a which can be fitted in the body-side rib 113 to be held between the pair of plate-like portions 113d and 113e of the body-side rib 113, and the second fitting portion 123b which can be fitted in the body-side rib 113 in gripping relation to the plate-like portion 113f of the body-side rib 113. Therefore, merely by providing the single body-side rib 113 and the single cover-side rib 123, the positioning in a direction parallel to the plate-like portion 113f (that is, in a left-right direction) can be effected by the first fitting portion 123a, while the positioning in a direction parallel to the pair of plate-like portions 113d and 113e (that is, in a front-rear direction of a vehicle) can be accurately effected by the second fitting portion 123b.

Furthermore, the triangular ribs 113c are formed on the body-side rib 113. With this construction, the triangular ribs 113c are designed to be deformed or crushed by the cover-side rib 123 when the body-side rib 113 and the cover-side rib 123 are fitted together. Therefore, after the two ribs 113 and 123 are fitted together, a relative slight movement therebetween is prevented, and the generation of abnormal sounds due to this slight movement can be prevented.

In the above embodiment, the body-side rib 113 is formed into the generally U-shaped cross-section. However, the fitting hole in the body-side rib 113 can be formed into a generally round cross-section, in which case a front side of the periphery of the body-side rib, forming the fitting hole, is open, so that the body-side rib has a generally arc-shaped cross-section. In the case of providing such a body-side rib 113 of the generally arc-shaped cross-section, the upper cover 120 is angularly moved about the axis (centerline) of the fitting hole, and therefore it is necessary to provide at least two body-side ribs 113. The body-side rib 113 and the cover-side rib 123 are not limited to their respective shapes shown in the above embodiment. Furthermore, although the triangular ribs 113c are formed on the body-side rib 113, these triangular ribs 113c can be formed on the cover-side rib 123.

Although the invention has been illustrated and described for the particular preferred embodiments, it is apparent to a person skilled in the art that various changes and modifications can be made on the basis of the teachings of the invention. It is apparent that such changes and modifications are within the scope of the invention as defined by the appended claims.

## Claims

1. A meter (100), comprising a meter body (110) that includes:
an indicator (111) provided at a front side thereof; and
a connector (112) for electrical connecting to an optional meter (200); and
a meter cover (120) that is arranged to cover the meter body (110), and includes a notch portion (122) in a side face thereof;
wherein the meter body (110) has a first positioning part; and
wherein the meter cover (120) has a second positioning part for positioning the meter body (110) and the meter cover (120) relative to each other so that the connector (112) is exposed through the notch portion (122) when the first positioning (113) part is engaged with the second positioning part (123).

2. The meter according to claim 1, **characterized in that** one of the first and second positioning parts includes a first convex portion (113) having a fitting hole (113a) in a top face of the first convex portion; and
wherein the other of the first and second positioning parts includes a second convex portion (123) that is fitted in the fitting hole (113a); and
wherein the first convex portion (113) has an opening (113b) in a side wall of the first convex portion, the opening (113b) communicating with the fitting hole (113a).

3. The meter according to claim 2, **characterized in that** the first convex portion (113) has a first side wall (113d), a second side wall (113e) that is parallel with the first side wall (113d), and a third side wall (113f) that is perpendicular to the first (113d) and second side walls (113e); and
wherein the second convex portion (123) has a first fitting portion (123a) that is fitted between the first side wall (113d) and the second side wall (113e).

4. The meter according to claim 3, **characterized in that** the second convex portion (123) has a second fitting portion (123b) that grips the third side wall (113f) of the first convex portion (113).

5. The meter according to claim 4, **characterized in that** the second fitting portion (123b) is a recessed portion formed on the second convex portion (123); and
wherein the recessed portion is engaged to the third side wall (113f).

6. The meter according to claim 1, **characterized in that** at least one of the first and second positioning parts has an elastic convex portion (113c) formed on a contact area between the first positioning portion and the second positioning portion.

## Patentansprüche

1. Messvorrichtung (100), die ein Messvorrichtungsgehäuse (110) umfasst, das enthält:
eine Anzeigeeinrichtung (111), die an seiner Vorderseite vorhanden ist; und
einen Verbinder (112) zur elektrischen Verbindung mit einer optionalen Messvorrichtung (200); und
eine Messvorrichtungs-Abdeckung (120), die vorhanden ist, um das Messvorrichtungsgehäuse (110) abzudecken und einen Einkerbungsabschnitt (122) an einer Seitenfläche derselben enthält;
wobei das Messvorrichtungsgehäuse (110) ein erstes Positionierteil aufweist; und
die Messvorrichtungsabdeckung (120) ein zweites Positionierteil zum Positionieren des Messvorrichtungsgehäuses (110) und der Messvorrichtungsabdeckung (120) relativ zueinander so aufweist, dass der Verbinder (112) durch den Einkerbungsabschnitt (122) freiliegt, wenn das Positionierteil (113) mit dem zweiten Positionierteil (123) in Eingriff gebracht wird.

2. Messvorrichtung nach Anspruch 1, **dadurch gekennzeichnet, dass** eines von dem ersten und dem zweiten Positionierteil einen ersten konvexen Abschnitt (113) mit einem Passloch (113a) in einer oberen Fläche des ersten konvexen Abschnitts enthält; und
wobei das andere von dem ersten und dem zweiten Positionierteil einen zweiten konvexen Abschnitt (123) enthält, der in das Passloch (113a) eingepasst ist; und
der erste konvexe Abschnitt (113) eine Öffnung (113b) in einer Seitenwand des ersten konvexen Abschnitts aufweist und die Öffnung (113b) mit dem Passloch (113a) in Verbindung steht.

3. Messvorrichtung nach Anspruch 2, **dadurch gekennzeichnet, dass** der erste konvexe Abschnitt (113) eine erste Seitenwand (113d), eine zweite Seitenwand (113e), die parallel zu der ersten Seitenwand (113d) ist, und eine dritte Seitenwand (113f) aufweist, die senkrecht zu der ersten (113d) und der zweiten Seitenwand (113e) ist; und
wobei der zweite konvexe Abschnitt (123) einen ersten Passabschnitt (123a) aufweist, der zwischen die erste Seitenwand (113d) und die zweite Seitenwand (113e) eingepasst ist.

4. Messvorrichtung nach Anspruch 3, **dadurch gekennzeichnet, dass** der zweite konvexe Abschnitt (123) einen zweiten Passabschnitt (123b) aufweist, der die dritte Seitenwand (113f) des ersten konvexen Abschnitts (113) ergreift.

5. Messvorrichtung nach Anspruch 4, **dadurch gekennzeichnet, dass** der zweite Passabschnitt (123b) ein vertiefter Abschnitt ist, der in dem zweiten konvexen Abschnitt (123) ausgebildet ist; und
wobei der vertiefte Abschnitt mit der dritten Seitenwand (113f) in Eingriff ist.

6. Messvorrichtung nach Anspruch 1, **dadurch gekennzeichnet, dass** wenigstens das erste oder das zweite Positionierteil einen elastischen konvexen Abschnitt (113c) aufweist, der an einem Kontaktbereich zwischen dem ersten Positionierabschnitt und dem zweiten Positionierabschnitt ausgebildet ist.

## Revendications

1. Compteur (100), comprenant un corps de compteur (110) qui inclut :
un indicateur (111) prévu sur un côté frontal de celui-ci ; et
un connecteur (112) pour une connexion électrique vers un compteur optionnel (200) ; et
un couvercle de compteur (120) qui est agencé pour couvrir le corps de compteur (110), et qui inclut une portion en encoche (122) dans une face latérale de celui-ci ;
dans lequel le corps de compteur (110) possède une première partie de positionnement ; et
dans lequel le couvercle de compteur (120) possède une seconde partie de positionnement pour positionner le corps de compteur (110) et le couvercle de compteur (120) en relation l'un par rapport à l'autre de telle façon que le connecteur (112) est exposé à travers la portion en encoche (122) quand la première partie de positionnement (113) est engagée avec la seconde partie de positionnement (123).

2. Compteur selon la revendication 1, **caractérisé en ce que** l'une des parties parmi la première et la seconde partie de positionnement inclut une première portion convexe (113) ayant un trou d'engagement (113a) dans une face supérieure de la première portion convexe ; et
dans lequel l'autre partie parmi la première et la seconde partie de positionnement inclut une seconde portion convexe (123) qui est engagée dans le trou d'engagement (113a) ; et
dans lequel la première partie convexe (113) possède une ouverture (113b) dans une paroi latérale de la première portion convexe, l'ouverture (113b) communiquant avec le trou d'engagement (113a).

3. Compteur selon la revendication 2, **caractérisé en ce que** la première portion convexe (113) possède une première paroi latérale (113d), une seconde paroi latérale (113e) qui est parallèle à la première paroi latérale (113d), et une troisième paroi latérale (113f) qui est perpendiculaire à la première (113d) et à la seconde paroi latérale (113e) ; et
dans lequel la seconde portion convexe (123) possède une première portion d'engagement (123a) qui est engagée entre la première paroi latérale (113d) et la seconde paroi latérale (113e).

4. Compteur selon la revendication 3, **caractérisé en ce que** la seconde portion convexe (123) possède une seconde portion d'engagement (123b) qui agrippe la troisième paroi latérale (113f) de la première portion convexe (113).

5. Compteur selon la revendication 4, **caractérisé en ce que** la seconde portion d'engagement (123b) est une portion évidée formée sur la seconde portion convexe (123) ; et
dans lequel la portion évidée est engagée avec la troisième portion paroi latérale (113f).

6. Compteur selon la revendication 1, **caractérisé en ce qu'**une partie au moins parmi la première et la seconde partie de positionnement possède une portion convexe élastique (1 13c) formée sur une zone de contact entre la première portion de positionnement et la seconde portion de positionnement.
